# EUROPEAN PATENT SPECIFICATION

(11) **EP 3 236 765 B1**
(45) Date of publication and mention of the grant of the patent: **25.03.2020**
(21) Application number: 15841110.8
(22) Date of filing: 23.12.2015
(51) Int. Cl.: A23C 19/14, A01J 25/16

(54) **METHOD AND DEVICE FOR RIPENING OF CHEESE**
VERFAHREN UND VORRICHTUNG ZUM REIFEN VON KÄSE
PROCÉDÉ ET DISPOSITIF DE MATURATION DU FROMAGE

(30) Priority: 24.12.2014 NL 2014058
(43) Date of publication of application: 01.11.2017
(73) Proprietor: Stafier Holland B.V., 6902 PC Zevenaar (NL)
(72) Inventor: BEIJER, Ruben Theodoor, 6902 PC Zevenaar (NL)
(74) Representative: Algemeen Octrooi- en Merkenbureau B.V.
(86) International application number: PCT/NL2015/050904
(87) International publication number: WO 2016/105197

(56) References cited:
- EP-A1- 0 109 995
- WO-A1-00/32035
- FR-A- 1 550 272
- FR-A- 1 583 115

## Description

The present invention is related, according to a first aspect, to a method for ripening cheese in racks, comprising the steps of
a) providing a stack of cheese ripening plates at a production location;
b) taking a first cheese ripening plate from the stack;
c) placing one or more cheeses on the first cheese ripening plate and placing the cheese ripening plate on a carrier;
d) taking a further cheese ripening plate from the stack;
e) placing one or more cheeses on the further cheese ripening plate;
f) placing the further cheese ripening plate on top of the cheese ripening plate;
g) transporting the placed cheeses to a ripening location and ripening, during a ripening's period, the stored cheeses;
h) removing the placed cheese ripening plates and removing the cheeses from the cheese ripening plates after the ripening's period; and
i) moving the cheese ripening plates back to the production location.

In the method, the steps do not need to be performed in the prescribed order. It is for example possible that cheeses are placed on a cheese ripening plate before they are stacked.

Such a method is known in the art and is being applied for decades now. In the known method, a frame on wheels is provided. The frame has the shape of an open closet and has longitudinal beams, transversal beams and posts which are connected to each other via the corners. At both sides of the frame horizontal supporting profile extend, between a front and a rear post as carriers, in the form of corner profiles. The cheese ripening plates are air permeable stainless steel plates than are provided, at the edges thereof, in use, of circumferential walls which extend downwardly that strengthen the cheese ripening plates. The cheese ripening plates having placed thereon cheeses, are shoved into the frame in such a way that the circumferential walls of the cheese ripening plates rest on the supporting profiles. The mutual distance between two supporting profiles directly above each other is larger than the thickness (that is, the height) of the cheeses placed, or to be placed, on the cheese ripening plates plus the height of the circumferential walls of the cheese ripening plates, such that on each pair of supporting profiles in a horizontal plane, a cheese ripening plate can be placed without damaging the cheeses. When the frame is fully filled, it is transported to a ripening space where the cheese are ripened for a certain period. The cheese ripening plates are removed from the frames, after ripening, and the cheeses are being removed from the cheese ripening plates and the frames and the cheese ripening plates are being cleaned, stored and transported to the production location for a next cycle. EP 0109995 A1 discloses a ripening tray moulded of plastics material.

A downside of the known method is that the method requires a substantial logistic load.

It is an object of the present invention to provide for a method according to the above which requires less logistic load compared to the known method. The object is achieved by the present invention, because the further cheese ripening plate is provided with distance holders, which are movable between a storage state, in which the distance holders provide the cheese ripening plates which are directly stacked on top of each other with a mutual distance which is smaller than the thickness of the cheeses placed on, or to be placed on, the cheese ripening plates, and a use state, wherein the distance holders provide the first and further cheese ripening plate which are directly stacked up on each other with a mutual distance which is larger than the thickness of the cheeses placed on the first cheese ripening plate, wherein the distance holders are provided non-point symmetrically over a cheese ripening plate and wherein the distance holders are moved after step d) and before step f) from the storage state to a use state, wherein moving comprises turning a cheese ripening plate in a horizontal plane between a storage state and the use state. The verb moving does not need to be limited to moving the distance holders with respect to the remainder of the cheese ripening plates. The frames in the known cheese ripening device are superfluous as the cheese ripening plates having the cheeses on top thereof are directly stackable in the storage state as well as in the use state. Preferably, the distance holders of a cheese ripening plate bear, in the use state, preferably at their bottom side, on a cheese ripening plate which is directly beneath thereof, preferably on a top side of the distance holder of the cheese ripening plate. Further, the cheese ripening plates, when they are not in use, can be stacked relatively compactly and thus take in less space compared to empty frames and individually stored cheese ripening plates, or compared to frames with empty cheese ripening plates. The distance holder can be brought back to the storage state after the ripening period for a space efficient storage. As such, the object according to the present invention is achieved. The transport distance, at step g) and step i), is dependent on the distance between the production location and the ripening location. This distance can be 0 in theory, but in practice this distance will be larger. The locations can be geographically separated locations, wherein transport over the road is desired.

According to the present invention, the distance holders are provided non-point symmetrical over a cheese ripening plate and are being moved between a storage state and a use state by turning the cheese ripening plate in a horizontal plane. At such a non-point symmetrical orientation it is possible that in a first mutual orientation (use state) of two directly stacked cheese plates on top of each other, below sides of the distance holders of the top cheese ripening plate abut on the top sides of the distance holders of a cheese ripening plate directly below that one, while the distance holders of the top cheese ripening plate extend at a horizontal distance, at a second mutual orientation (storage state), that is around a 180 degrees around a vertical axis turned state, from the distance holders of the cheese ripening plate directly below that one.

The above entails that a top cheese ripening plate is to be turned horizontally with respect to a below cheese ripening plate to provide this one from a use state to a storage state, and vice versa. In case of elongated, rectangular cheese ripening plates, this horizontal turning is typically 180 degrees. In case of a rectangular, square cheese ripening plate, this turning can also be 90 degrees, or 27 degrees.

Due to the non-point symmetrical orientation of the distance holders, these distance holders fall next to each other when a first cheese ripening plate has a different horizontal orientation with respect to a second cheese ripening plate stacked on top of the first one. The stacked cheese ripening plates will be in a storage state due to this aspect. In case the first cheese ripening plate has a same horizontal orientation with respect to a second cheese ripening plate stacked on top thereof, the distance holders will be oriented in the extension of each other. The stacked cheese ripening plates will be in a use state due to this aspect.

The cheese ripening device can be placed on a chassis with wheels for transportation purposes, or, alternatively, a bottom cheese ripening plate can be provided with wheel in stead of distance holders. A cheese ripening device according to the present invention can, moreover, also be arranged without any wheels, and can be transported with other transport means, like a pallet truck.

In a preferred embodiment according to the present invention, the distance holders are being manipulated mechanically after step d) and before step f) between the storage state and the use state. In such a way, the distance holders may be arranged as legs that are pivotable or foldable between a storage state, wherein the distance holders extend substantially in a single plane with the cheese ripening plate, and a use state in which the distance holders extend in an angle *α* of more than 45 degrees, that is between 45 and 135 degrees, with respect to the cheese ripening plate.

It is preferred that the distance holders are being oriented in the use state in such a way, that a higher vertically downwardly load of the cheese ripening plate holds the distance holder firmer in the use state. That is, the distance holders are being pivoted, for example arranged as legs described in the previous paragraph, for obtaining an angle *α* over an angle of about 180-*α* degrees. In such a way it is prevented that the legs simply pivot back to the storage state under the load of the cheeses and potentially on the cheeses placed on top of the particular cheese ripening plate.

In case locking means are provided for locking the distance holders in a particular state and for locking the distance holders once the distance holders have been moved in the particular state. The locking means thus prevent that the distance holders fold together and thus prevent that the stacked cheese ripening plates having cheeses on top thereof collapse.

As an alternative, or optionally, pretensioning means can be provided, which pretension the distance holders in the direction of either the use state, or the storage state when the cheese ripening plate is brought into that particular state. The pretensioning means, for example springs, more particularly spiral springs, are able to support the manipulation of the distance holders and/or are able to obstruct the undesired return to the other state.

Preferably, the cheese ripening plate comprises a circumferential wall which is directed from the supporting plane of the cheese ripening plate upwards. Compared to known cheese ripening plates additional savings in space can be realised, as the downwardly directed reinforcing ribs, at least in use, require more space. This, amongst other, because the cheese ripening plates I the known method are being shoved in a substantially horizontal manner in a frame, while the cheese ripening plates according to the present invention are being stacked on top of each other using a movement with a vertical component.

According to a second aspect, the invention is related to cheese ripening device comprising a space surrounded by walls of a building and provided with at least one cheese ripening rack comprising cheese ripening plates stacked on top of each other, wherein cheeses to be ripen are placed on top of the cheese ripening plates. The second aspect is directed to solve problems which correspond to the downsides which are discusses with respect to the first aspect of the invention. The cheese ripening device is characterized in that the at least one cheese ripening rack is composed of cheese ripening plates which are provided with distance holders, which distance holders are movable between a storage state, wherein the distance holders provide the directly stacked cheese ripening plates on top of each other with a mutual distance which is smaller than the thickness of the cheeses placed, or to be placed, on top of the cheese ripening plates, and an use state, wherein the distance holders provide the directly stacked first and further cheese ripening plate on top of each other with a mutual distance which is larger than the thickness of the cheeses on top of the first cheese ripening plate.

According to a third aspect, the invention is related to a cheese ripening plate according to independent claim 8.

Preferably, the distance holders are mechanically manipulatable between a storage state and a use state.

In an embodiment, the distance holders are oriented in the use state in such a way that a higher vertical downward load of the cheese ripening plate holds the distance holders more firmly in the use state.

It is preferred that locking means are provided for locking the distance holders in a particular state.

In a preferred embodiment, pretensioning means are provided which pretension the distance holder in the direction of either the use state or the storage state.

It is preferred in case the distance holders are provided non-point symmetrically over a cheese ripening plate and wherein the distance holders are movable by turning a cheese ripening plate in a horizontal plane between a storage state and a use state.

The present invention will be explained here below with respect to several preferred embodiment and with reference to the accompanied figures, in which:
Fig. 1 shows a perspective side view of a first embodiment of a cheese ripening plate according to the present invention;
Fig. 2 shows a perspective side view of stacked cheese ripening plates from figure 1 in a storage state;
Fig. 3 shows a perspective side view of cheese ripening plates according to fig. 1 in a use state;
Fig. 4 shows a perspective side view of an alternative embodiment of a cheese ripening plate according to the present invention;
Fig. 5 shows a perspective side view of stacked cheese ripening plates according to fig. 4 in a storage state;
Fig. 6 shows a perspective side view of stacked cheese ripening plates according to fig. 4 in a use state;
Fig. 7 shows a perspective side view of another alternative embodiment of a cheese ripening plate according to the present invention in a storage state;
Fig. 8 shows a perspective side view of a cheese ripening plate according to fig.7 in a use state;
Fig. 9 shows a perspective side view of stacked cheese ripening plates according to fig. 7 and 8 in a storage state;
Fig. 10 shows a perspective side view of stacked cheese ripening plates according to fig. 7 and in a use state.

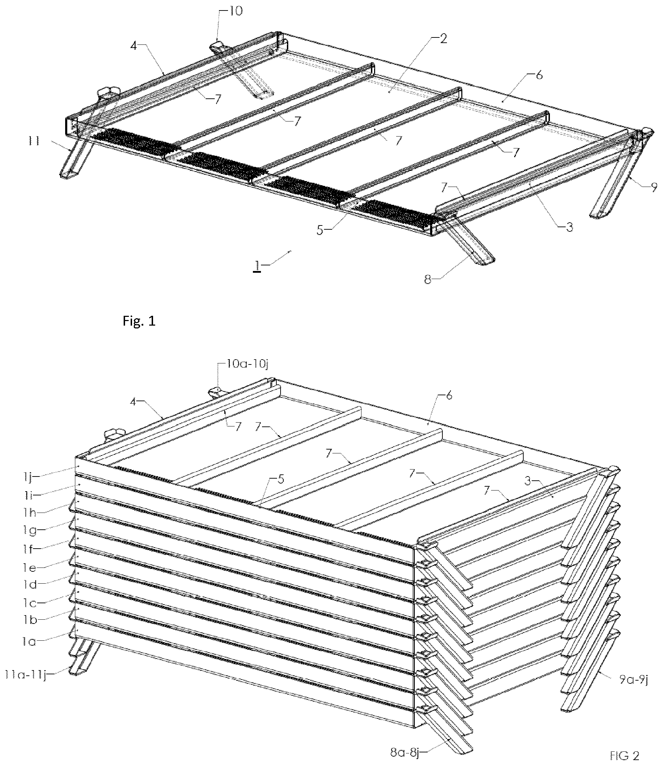

With reference to figure 1, a perspective side view of a first embodiment of a cheese ripening plate 1 is shown for use in a method and/ or a device for ripening cheeses according to the present invention. Cheese ripening plate 1 has a perforated stainless steel plate 2 as supporting plane for cheeses. Perforated stainless steel plate 2 is being surrounded by (upwardly directed) upright circumferential walls 3, 4, 5, 6. In figure 1 perforations are drawn along a strip. It may be clear that the perforations are provided spread out along the entire plate. Ribs 7 extend between the circumferential walls 5, 6 at the longitudinal side of the perforated stainless steel plate 2 which serve to support the supporting plate 2. Preferably, these ribs have an upwardly directed dome type shape; that is an omega type shape. Legs 8, 9, 10, 11 are provided at the short circumferential walls 3, 4 as distance holders for maintaining the cheese ripening plate 1, in a use position, at a distance from a cheese ripening plate which is, in the use state, oriented directly below the present cheese ripening plate 1. This is explained in more detail further on. In fig. 1 it is shown that the legs 8, 9 extend from the circumferential wall 3 in a convergent manner with respect to each other. Legs 10, 11, however, extend in a divergent manner from circumferential wall 4 with respect to each other. In fig. 1, the circumferential walls 3, 4, 5,6 are shown in the form of corner profiles on which a perforated supporting plate 2 rests. It may be clear that the supporting plate 2 is formed integrally with one or more circumferential walls by means of setting the supporting plate 2. Further, the legs are connected to circumferential walls 5, 6 which are opposite to each other at their longitudinal side, wherein a single pair of legs extend in a different direction compared to the other pair of legs. Here, a pair of legs can be defined as two legs residing at circumferential walls opposite to each other. The angle in which the legs 8, 9, 10, 11 extend with respect to the supporting plate 2 can be selected as desired, as long as the particular legs 8, 9, 10, 11 have sufficient supporting capabilities.

With reference to fig. 2, several stacked cheese ripening plates 1a-1j of the type shown in fig 1 are shown. Cheese ripening plates 1a-1j fit tightly to each other, wherein two cheese ripening plates 1 on top of each other abut with their legs 8, 9, 10, 11 on each other. This is possible because all legs 8, 9, 10 legs on top of each other extend parallel to each other respectively 11. A such a very compact stack of cheese ripening plates 1a-1j is realised.

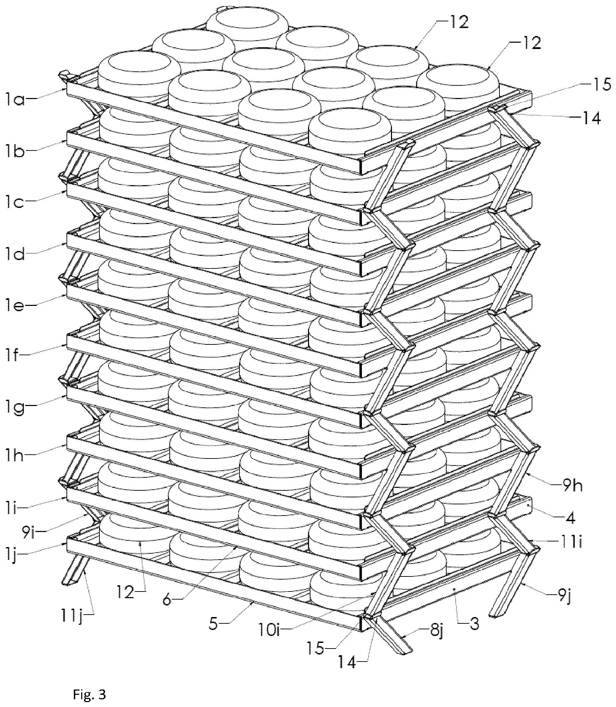

With reference to fig. 3, cheese ripening plates 1a - 1j are again shown, but this time stacked in a use state. This is accomplished by taking cheese ripening plate 1j from the stack of fig. 2 and placing this on a (not shown) surface. Subsequently, cheese ripening plate 1i from figure. 2 is taken from the stack and is turned 180 degrees around a vertical axis before the cheese ripening plate 1i is placed on top of cheese ripening plate 1j. Cheeses 12 can be placed on a particular cheese ripening plate 1 when the cheese ripening plates 1 are still stacked as shown in fig. 2. The cheeses may also be placed on top of the particular cheese ripening plate 1 when the particular cheese ripening plate 1 is placed on the stack in the use state as shown in fig. 3. It is off course also possible that the cheeses 12 are being placed on the particular cheese ripening plate 1 when they are being transferred from the stack shown in fig. 2 to the stack shown in figure 3. Fig. 3 further shows that the legs 8, 9, 10, 11, at their top side, are provided with an upright ridge 14, 15 which defines, partly, the supporting plane of a top leg on top of a bottom leg.

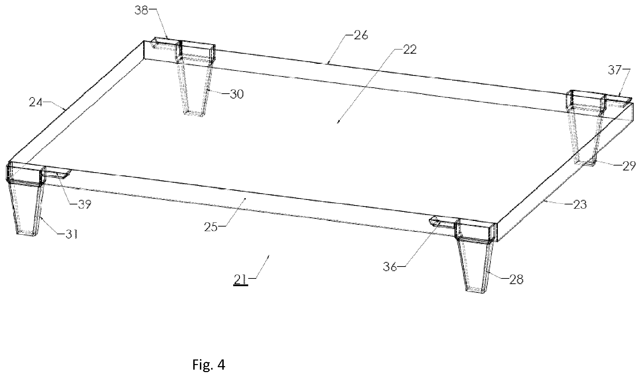

With reference to fig. 4, alternative embodiments of a cheese ripening plate 21 according to the present invention are shown. Cheese ripening plate 21 has a perforated stainless steel plate 22 as supporting plate 22. The supporting plate 22 is also surrounded by upwardly directed upright circumferential walls 23, 24, 25, 26. At both longitudinal upright circumferential walls 25, 26 substantially vertically extending legs 28, 29, 30, 31 are provided. Legs 28, 29, 30, 31 are arranged hollowly and run from the particular circumferential wall 25, 265 somewhat tapered downwardly. Receiving space 36, 37, 38, 39 is provided next to legs 28, 29, 30, 31, opposite to the legs 29, 28, 31 and 30, respectively.

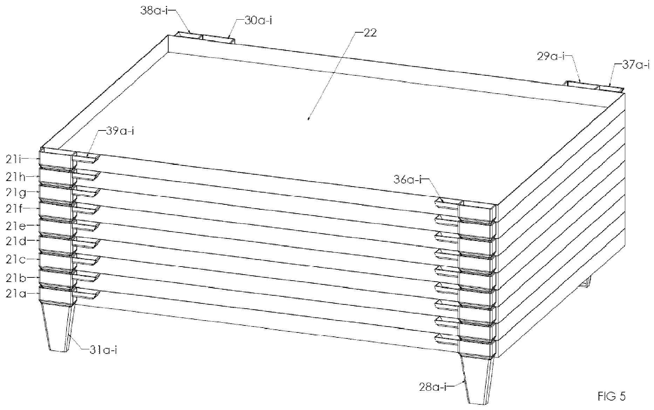

Figure 5 shows a stack of cheese ripening plates 21a-21i, in a storage state, of the type that is shown in fig. 4. In fig. 5 it is shown that the legs 28a-28i, 29a-29i, 30a-30i respectively 31a-31i are shoved into each other, such that a compact stack of cheese ripening plates 21a-21i is realised. Receiving spaces 36a-36i, 37a-37i, 38a-38i and 39a-39i are also situated on top of each other.

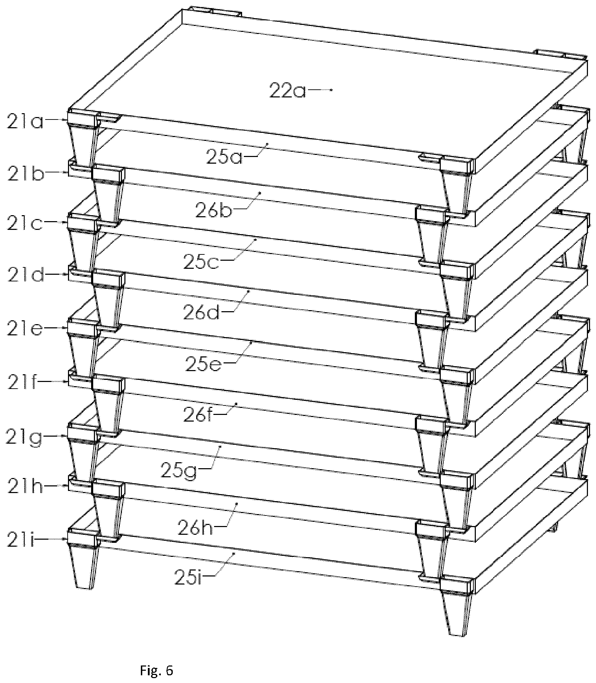

In fig. 6, the cheese ripening plates 21a-21i are stacked in a use state. In order to improve visibility, no cheeses are shown on top of the cheese ripening plates 21. In the use state, the cheese ripening plates 21 serve the purpose of ripening the cheeses placed on top of them. Corresponding to fig. 2 and 3, the stack of cheese ripening plates 21a-21i from fig. 6 is formed by taking a cheese ripening plate 21i from the stack and subsequently placing the cheese ripening plate 21i on a surface. Subsequently, cheese ripening plate 21h is taken from the stack shown in fig. 5 and is rotated 180 degrees around a vertical axis before it is placed on cheese ripening plate 21i. A different orientation of the legs 8, 9, 10, 11 of the first embodiment ensures for a different stacking (minimum distance between the plates in fig. 2 and a maximum distance between the plates in fig. 3). This is realised with the cheese ripening plates 21a-21i because the legs 28a-28i, 29a-29i, 30a-30i and 31a-31i are on top of each other and in each other in the use state shown in fig. 5, while the legs 28, 29, 30 and 31, respectively receiving spaces 37, 36, 31, 38 are staggered with respect to each other.

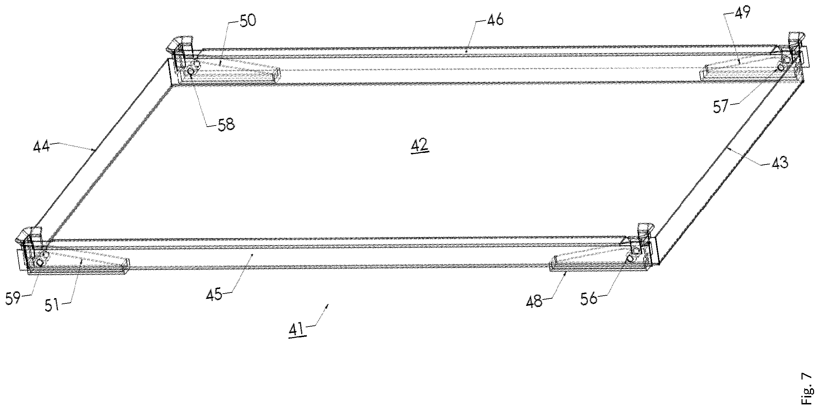

Figure 7 shown an alternative embodiment of a cheese ripening plate 41. Cheese ripening plate 41 also has a perforated stainless steel plate 42 as supporting plate 42. Supporting plate 42 is surrounded by upright circumferential walls 43, 44, 45, 46. At the longitudinal circumferential walls, pivotable legs 48, 49, 50, respectively 51 are provided around a pivot axis 56, 57, 58, 59. In fig. 7, the legs 48, 49, 50, 51 extend substantially parallel to the particular circumferential wall.

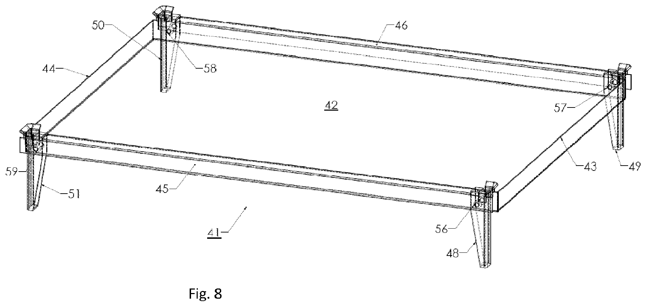

Fig. 8 shown a cheese ripening plate 41 in a use state, wherein legs 48, 49, 50, 51 are pivoted around the particular pivot axis 56, 57, 58, 59 such that they extend substantially perpendicular with respect to the supporting plate 41 and the particular circumferential wall.

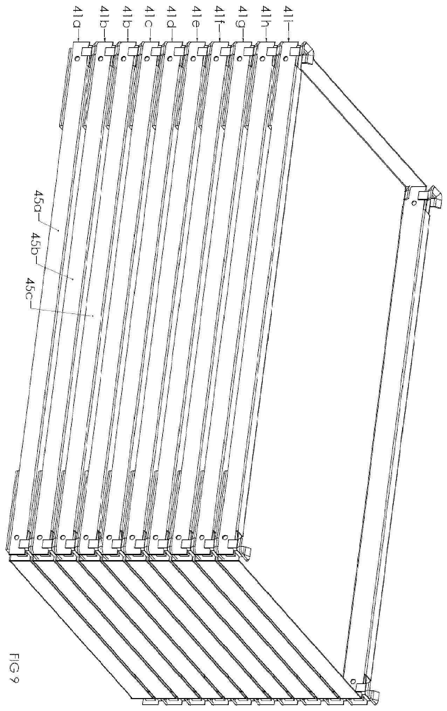

Fig. 9 shows a stack of cheese ripening plates 41a-41k in the use state shown in fig. 7.

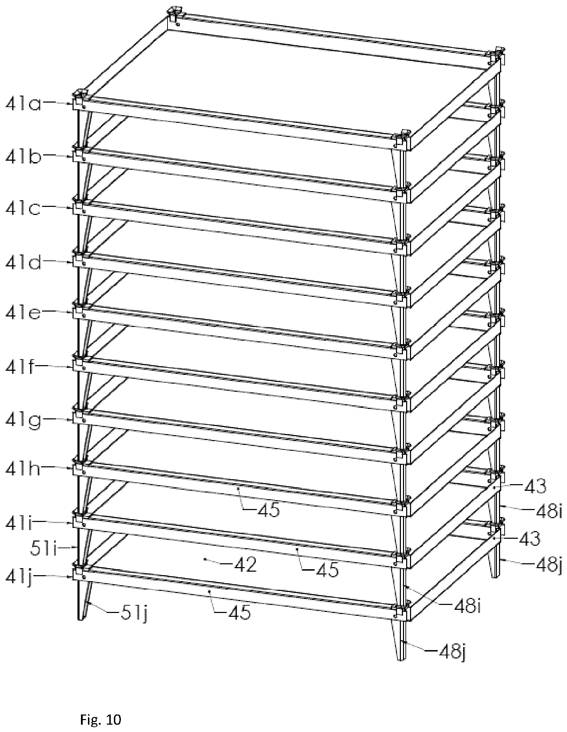

Fig. 10 shown a stack of cheese ripening plates 41a-41i in the use state, again without any cheese placed on top of them. The stack from fig. 10 is realised by taking a cheese ripening plate 41j from the stack of fig. 9, where after the legs 48, 49, 50, 51 are being pivoted around the respective pivot axis's 56, 57, 58, 59 and are being placed on a surface. Subsequently, the cheese ripening plate 41i is taken from the stack from fig. 9, and after pivoting the legs 48, 49, 50, 51, it is placed on the supporting planes of the legs of the cheese ripening plate 41j right below it. It is noted that rotating the cheese ripening plates 41a-41j around a vertical axis is not required.

The present inventions is shown and discussed with respect to the preferable embodiments in the figures and the description here above. It may be clear that many variations are thinkable, which are within the scope of protection of the present invention as defined by the appending claims. For example, the cheese ripening plate is described having a perforated stainless steel plate as supporting plate. The perforations are not shown clearly in the appended figures, but serve the purpose for making a vertical air stream between the ripening cheeses possible. It may be clear that also other materials and/or arrangements than stainless steel, perforated, plates are thinkable for supporting the cheeses, for example stainless steel lamellae or wooden plates with openings through which air can flow. From the embodiments it is clear that a cheese ripening plate, depending on the particular embodiment, can be brought from and to a storage state and a use state in different manners. In case of a non-point symmetrical positioning of the distance holder (legs) that may be realised by rotation around a vertical axis. It is also possible to place cheese ripening plates on a new stack, from two stacks which comprise cheese ripening plates which are oppositely oriented, in an alternating manner, wherein, just to be clear, the same effect can be realised. In stead of pivoting the legs, the legs may also be shoved between a point-symmetrical and a non-point symmetrical orientation to realise the desired effect according to the present invention. The circumferential walls are, in the figures, direct to above each time, but can also, alternatively, be directed downwards from the supporting plate. The cheese ripening plates shown and described in the figures and the description as a single plate having supporting ribs. It may be clear that a cheese ripening plate may be composed of plate elements which are within the circumferential wall and are placed adjacently to each other and which can overlap to each other, preferably by means of arcuated shaped profiles at the side edges. It is preferred in case a relatively large arcuated profile falls over a somewhat smaller arcuated profile of an adjacent plate element. In case the bulging is directed upwardly, it reduces the risk to damaging the cheeses by accidently placing them on a rib or a profile.

## Claims

1. A method for ripening cheese (12) in racks, comprising the steps of
a) providing a stack of cheese ripening plates (1a - 1j, 21a - 21j) at a production location;
b) taking a first cheese ripening plate (1a - 1j, 21a - 21j) from the stack;
c) placing one or more cheeses 912) on the first cheese ripening plate (1a - 1j, 21a - 21j) and placing the cheese ripening plate (1a - 1j, 21a - 21j) on a carrier;
d) taking a further cheese ripening plate (1a - 1j, 21a - 21j) from the stack;
e) placing one or more cheeses (12) on the further cheese ripening plate (1a - 1j, 21a - 21j);
f) placing the further cheese ripening plate (1a - 1j, 21a - 21j) on top of the cheese ripening plate (1a - 1j, 21a - 21j);
g) transporting the placed cheeses (12) to a ripening location and ripening, during a ripening's period, the stored cheeses (12);
h) removing the placed cheese ripening plates (1a - 1j, 21a - 21j) and removing the cheeses (12) from the cheese ripening plates (1a - 1j, 21a - 21j) after the ripening's period; and
i) moving the cheese ripening plates (1a - 1j, 21a - 21j) back to the production location, wherein the further cheese ripening plate (1a - 1j, 21a - 21j) is provided with distance holders (8, 9, 10, 11, 28, 29, 30, 31), which are movable between a storage state, in which the distance holders (8, 9, 10, 11, 28, 29, 30, 31) provide the cheese ripening plates (1a - 1j, 21a - 21j) which are directly stacked on top of each other with a mutual distance which is smaller than the thickness of the cheeses (12) placed on, or to be placed on, the cheese ripening plates (1a - 1j, 21a - 21j), and a use state, wherein the distance holders (8, 9, 10, 11, 28, 29, 30, 31) provide the first and further cheese ripening plate (1a - 1j, 21a - 21j) which are directly stacked up on each other with a mutual distance which is larger than the thickness of the cheeses (12) placed on the first cheese ripening plate (1a - 1j, 21a - 21j), **characterised in that** the distance holders (8, 9, 10, 11, 28, 29, 30, 31) are provided non-point symmetrically over a cheese ripening plate (1a - 1j, 21a - 21j) and wherein the distance holders (8, 9, 10, 11, 28, 29, 30, 31) are moved after step d) and before step f) from the storage state to a use state, wherein moving comprises turning a cheese ripening plate (1a - 1j, 21a - 21j) in a horizontal plane between a storage state and the use state.

2. Method according to claim 1, **characterized in that** the distance holders (8, 9, 10, 11, 28, 29, 30, 31) are oriented in the use state in such a way that a higher vertical downward load of the cheese ripening plate holds the distance holders (8, 9, 10, 11, 28, 29, 30, 31) firmer in the use state.

3. Method according to any of the previous claims **characterized in that** locking means are provided for locking the distance holders (8, 9, 10, 11, 28, 29, 30, 31) in a particular state and that the distance holders (8, 9, 10, 11, 28, 29, 30, 31) are being locked after the distance holders (8, 9, 10, 11, 28, 29, 30, 31) have been moved in the particular state.

4. Cheese ripening device comprising a space surrounded by walls of a building and provided with at least one cheese ripening rack comprising cheese ripening plates (1a - 1j, 21a - 21j) stacked on top of each other, wherein cheeses (12) to be ripen are placed on top of the cheese ripening plates (1a - 1j, 21a - 21j), wherein the at least one cheese ripening rack is composed of cheese ripening plates (1a - 1j, 21a - 21j) which are provided with distance holders (8, 9, 10, 11, 28, 29, 30, 31), which distance holders (8, 9, 10, 11, 28, 29, 30, 31) are movable between a storage state, wherein the distance holders (8, 9, 10, 11, 28, 29, 30, 31) provide the directly stacked cheese ripening plates (1a - 1j, 21a - 21j) on top of each other with a mutual distance which is smaller than the thickness of the cheeses (12) placed, or to be placed, on top of the cheese ripening plates (1a - 1j, 21a - 21j), and an use state, wherein the distance holders (8, 9, 10, 11, 28, 29, 30, 31) provide the directly stacked first and further cheese ripening plate (1a - 1j, 21a - 21j) on top of each other with a mutual distance which is larger than the thickness of the cheeses (12) on top of the first cheese ripening plate (1a - 1j, 21a - 21j), **characterised in that** the distance holders (8, 9, 10, 11, 28, 29, 30, 31) are provided non-point symmetrically over a cheese ripening plate (1a - 1j, 21a - 21j) and wherein the distance holders (8, 9, 10, 11, 28, 29, 30, 31) are movable by turning a cheese ripening plate (1a - 1j, 21a - 21j) in a horizontal plane between a storage state and a use state.

5. Cheese ripening device according to claim 4, **characterized in that** the distance holders (8, 9, 10, 11, 28, 29, 30, 31) are oriented in the use state in such a way that a higher vertical downward load of the cheese ripening plate holds the distance holders (8, 9, 10, 11, 28, 29, 30, 31) more firmly in the use state.

6. Cheese ripening device according to any of the claims 4-5, **characterized in that** locking means are provided for locking the distance holders (8, 9, 10, 11, 28, 29, 30, 31) in a particular state.

7. Cheese ripening device according to any of the claims 4-6, **characterized in that** a cheese ripening plate (1a - 1j, 21a - 21j) comprises one or more circumferential walls (3, 4, 5, 6, 23, 24, 25, 26) that extend transversely to the support plane.

8. Cheese ripening plate (1a - 1j, 21a - 21j) arranged for use in a cheese ripening device according to any of the claims 4-7 and/or in a method according to any of the claims 1-3, wherein the cheese ripening plate (1a - 1j, 21a - 21j) is provided with distance holders (8, 9, 10, 11, 28, 29, 30, 31), which distance holders (8, 9, 10, 11, 28, 29, 30, 31) are movable between a storage state, wherein the distance holders (8, 9, 10, 11, 28, 29, 30, 31) provide the directly stacked cheese ripening plates (1a - 1j, 21a - 21j) on top of each other with a mutual distance which is smaller than the thickness of the cheeses (12) placed, or to be placed, on top of the cheese ripening plates (1a - 1j, 21a - 21j), and an use state, wherein the distance holders (8, 9, 10, 11, 28, 29, 30, 31) provide the directly stacked first and further cheese ripening plate (1a - 1j, 21a - 21j) on top of each other with a mutual distance which is larger than the thickness of the cheeses (12) on top of the first cheese ripening plate (1a - 1j, 21a - 21j), **characterised in that** the distance holders (8, 9, 10, 11, 28, 29, 30, 31) are provided non-point symmetrically over a cheese ripening plate (1a - 1j, 21a - 21j) and wherein the distance holders (8, 9, 10, 11, 28, 29, 30, 31) are movable by turning a cheese ripening plate (1a - 1j, 21a - 21j) in a horizontal plane between a storage state and a use state.

## Patentansprüche

1. Ein Verfahren zur Reifung von Käse (12) in Gestellen, das die folgenden Schritte umfasst
a) Bereitstellen eines Stapels von Käsereifungsplatten (1a - 1j, 21a - 21j) an einem Produktionsort;
b) Nehmen einer ersten Käsereifungsplatte (1a - 1j, 21a - 21j) von dem Stapel;
c) Platzieren von einem oder mehreren Käsen (912) auf der ersten Käsereifungsplatte (1a - 1j, 21a - 21j) und Platzieren der Käsereifungsplatte (1a - 1j, 21a - 21j) auf einem Träger;
d) Nehmen einer weiteren Käsereifungsplatte (1a - 1j, 21a - 21j) von dem Stapel;
e) Platzieren von einem oder mehreren Käsen (12) auf der weiteren Käsereifungsplatte (1a - 1j, 21a - 21j);
f) Auflegen der weiteren Käsereifungsplatte (1a - 1j, 21a - 21j) auf die Oberseite der Käsereifungsplatte (1a - 1j, 21a - 21j);
g) Transportieren der platzierten Käse (12) zu einem Reifungsort und Reifenlassen der gelagerten Käse (12) während einer Reifezeit;
h) Entfernen der platzierten Käsereifungsplatten (1a - 1j, 21a - 21j) und Entfernen der Käse (12) von den Käsereifungsplatten (1a - 1j, 21a - 21j) nach der Reifezeit; und
i) Bewegen der Käsereifungsplatten (1a - 1j, 21a - 21j) zurück an den Produktionsort,
wobei
die weitere Käsereifungsplatte (1a - 1j, 21a - 21j) mit Abstandshaltern (8, 9, 10, 11, 28, 29, 30, 31) versehen ist, die beweglich zwischen einem Lagerzustand, in dem die Abstandshalter (8, 9, 10, 11, 28, 29, 30, 31) die direkt aufeinander gestapelten Käsereifungsplatten (1a - 1j, 21a - 21j) auf einem gegenseitigen Abstand halten, der kleiner ist als die Dicke der auf den Käsereifungsplatten (1a - 1j, 21a - 21j) platzierten oder zu platzierenden Käse (12), und einem Gebrauchszustand, in welchem die Abstandshalter (8, 9, 10, 11, 28, 29, 30, 31) die erste und die weitere Käsereifungsplatte (1a - 1j, 21a - 21j), die direkt aufeinander gestapelt sind, auf einem gegenseitigen Abstand halten, der größer ist als die Dicke der auf der ersten Käsereifungsplatte (1a - 1j, 21a - 21j) angeordneten Käse (12), beweglich sind, **dadurch gekennzeichnet, dass**
die Abstandshalter (8, 9, 10, 11, 28, 29, 30, 31) nicht punktsymmetrisch über eine Käsereifungsplatte (1a - 1j, 21a - 21j) angeordnet sind, und wobei die Abstandshalter (8, 9, 10, 11, 28, 29, 30, 31) nach Schritt d) und vor Schritt f) aus dem Lagerzustand in einen Gebrauchszustand bewegt werden, wobei Bewegen Drehen einer Käsereifungsplatte (1a - 1j, 21a - 21j) in einer horizontalen Ebene zwischen einem Speicherzustand und dem Gebrauchszustand umfasst.

2. Verfahren nach Anspruch 1, **dadurch gekennzeichnet, dass** die Abstandhalter (8, 9, 10, 11, 28, 29, 30, 31) im Gebrauchszustand so ausgerichtet sind, dass eine höhere vertikale Abwärtsbelastung der Käsereifungsplatte die Abstandhalter (8, 9, 10, 11, 28, 29, 30, 31) fester im Gebrauchszustand hält.

3. Verfahren nach einem der vorstehenden Ansprüche, **dadurch gekennzeichnet, dass** Verriegelungsmittel vorgesehen sind, um die Abstandhalter (8, 9, 10, 11, 28, 29, 30, 31) in einem bestimmten Zustand zu verriegeln, und dass die Abstandhalter (8, 9, 10, 11, 28, 29, 30, 31) verriegelt werden, nachdem die Abstandhalter (8, 9, 10, 11, 28, 29, 30, 31) in den bestimmten Zustand bewegt worden sind.

4. Käsereifungsvorrichtung umfassend einen Raum, der von Wänden eines Bauwerks umgeben ist, und zumindest ein Käsereifungsgestell aufweist, das übereinander gestapelte Käsereifungsplatten (1a - 1j, 21a - 21j) umfasst, wobei zu reifende Käse (12) auf den Käsereifungsplatten (1a - 1j, 21a - 21j) platziert sind, wobei das zumindest eine Käsereifungsgestell aus Käsereifungsplatten (la - 1j, 21a - 21j) besteht, die mit Abstandhaltern (8, 9, 10, 11, 28, 29, 30, 31) versehen sind, wobei die Abstandhalter (8, 9, 10, 11, 28, 29, 30, 31) zwischen einem Lagerzustand, in dem die Abstandshalter (8, 9, 10, 11, 28, 29, 30, 31) die direkt aufeinander gestapelten Käsereifungsplatten (1a - 1j, 21a - 21j) auf einem gegenseitigen Abstand halten, der kleiner ist als die Dicke der auf den Käsereifungsplatten (1a - 1j, 21a - 21j) platzierten oder zu platzierenden Käse (12), und einem Gebrauchszustand, in welchem die Abstandshalter (8, 9, 10, 11, 28, 29, 30, 31) die erste und die weitere Käsereifungsplatte (1a - 1j, 21a - 21j), die direkt aufeinander gestapelt sind, auf einem gegenseitigen Abstand halten, der größer ist als die Dicke der auf der ersten Käsereifungsplatte (1a - 1j, 21a - 21j) angeordneten Käse (12), beweglich sind, **dadurch gekennzeichnet, dass**
die Abstandhalter (8, 9, 10, 11, 28, 29, 30, 31) nicht punktsymmetrisch über eine Käsereifungsplatte (1a - 1j, 21a - 21j) angeordnet sind, und wobei die Abstandhalter (8, 9, 10, 11, 28, 29, 30, 31) durch Drehen einer Käsereifungsplatte (1a - 1j, 21a - 21j) in einer horizontalen Ebene zwischen einem Lagerzustand und einem Gebrauchszustand bewegbar sind.

5. Käsereifungsvorrichtung nach Anspruch 4, **dadurch gekennzeichnet, dass** die Abstandhalter (8, 9, 10, 11, 28, 29, 30, 31) im Gebrauchszustand so ausgerichtet sind, dass eine höhere vertikale Abwärtsbelastung der Käsereifungsplatte die Abstandhalter (8, 9, 10, 11, 28, 29, 30, 31) im Gebrauchszustand fester hält.

6. Käsereifungsvorrichtung nach einem der Ansprüche 4-5, **dadurch gekennzeichnet, dass** Verriegelungsmittel zum Verriegeln der Abstandhalter (8, 9, 10, 11, 28, 29, 30, 31) in einem bestimmten Zustand vorgesehen sind.

7. Käsereifungsvorrichtung nach einem der Ansprüche 4-6, **dadurch gekennzeichnet, dass** eine Käsereifungsplatte (1a - 1j, 21a - 21j) eine oder mehr Umfangswände (3, 4, 5, 6, 23, 24, 25, 26) aufweist, die sich quer zur Stützebene erstreckt.

8. Käsereifungsplatte (1a - 1j, 21a - 21j), die zur Verwendung in einer Käsereifungsvorrichtung nach einem der Ansprüche 4-7 und/oder in einem Verfahren nach einem der Ansprüche 1-3 angeordnet ist, wobei die Käsereifungsplatte (1a - 1j, 21a - 21j) Abstandhalter (8, 9, 10, 11, 28, 29, 30, 31) umfasst, wobei die Abstandhalter (8, 9, 10, 11, 28, 29, 30, 31) beweglich zwischen einem Lagerzustand, in dem die Abstandshalter (8, 9, 10, 11, 28, 29, 30, 31) die direkt aufeinander gestapelten Käsereifungsplatten (1a - 1j, 21a - 21j) auf einem gegenseitigen Abstand halten, der kleiner ist als die Dicke der auf den Käsereifungsplatten (1a - 1j, 21a - 21j) platzierten oder zu platzierenden Käse (12), und einem Gebrauchszustand, in welchem die Abstandshalter (8, 9, 10, 11, 28, 29, 30, 31) die erste und die weitere Käsereifungsplatte (1a - 1j, 21a - 21j), die direkt aufeinander gestapelt sind, auf einem gegenseitigen Abstand halten, der größer ist als die Dicke der auf der ersten Käsereifungsplatte (1a - 1j, 21a - 21j) angeordneten Käse (12), beweglich sind, **dadurch gekennzeichnet, dass**
die Abstandhalter (8, 9, 10, 11, 28, 29, 30, 31) nicht punktsymmetrisch über eine Käsereifungsplatte (1a - 1j, 21a - 21j) angeordnet sind, und wobei die Abstandhalter (8, 9, 10, 11, 28, 29, 30, 31) durch Drehen einer Käsereifungsplatte (1a - 1j, 21a - 21j) in einer horizontalen Ebene zwischen einem Lagerzustand und einem Gebrauchszustand bewegbar sind.

## Revendications

1. Procédé d'affinage du fromage (12) dans des claies, comprenant les étapes consistant
a) à fournir un empilement de plateaux d'affinage du fromage (1a - 1j, 21a - 21j) à un site de production ;
b) à prendre un premier plateau d'affinage du fromage (1a - 1j, 21a - 21j) de l'empilement ;
c) à placer un ou plusieurs fromage(s) (12) sur le premier plateau d'affinage du fromage (1a - 1j, 21a - 21j) et à placer le plateau d'affinage du fromage (1a - 1j, 21a - 21j) sur un support ;
d) à prendre un autre plateau d'affinage du fromage (1a - 1j, 21a - 21j) de l'empilement ;
e) à placer un ou plusieurs fromage(s) (12) sur l'autre plateau d'affinage du fromage (1a - 1j, 21a - 21j) ;
f) à placer l'autre plateau d'affinage du fromage (1a - 1j, 21a - 21j) au-dessus du plateau d'affinage du fromage (1a - 1j, 21a - 21j) ;
g) à transporter les fromages placés (12) vers un site d'affinage et à affiner, pendant une période d'affinage, les fromages stockés (12) ;
h) à retirer les plateaux d'affinage du fromage placé (1a - 1j, 21a - 21j) et à retirer les fromages (12) des plateaux d'affinage du fromage (1a - 1j, 21a - 21j) après la période d'affinage ; et
i) à ramener les plateaux d'affinage du fromage (1a - 1j, 21a - 21j) au site de production,
dans lequel l'autre plateau d'affinage du fromage (1a - 1j, 21a - 21j) est pourvu de pièces d'écartement (8, 9, 10, 11, 28, 29, 30, 31), qui sont mobiles entre un état de stockage, dans lequel les pièces d'écartement (8, 9, 10, 11, 28, 29, 30, 31) fournissent aux plateaux d'affinage du fromage (1a - 1j, 21a - 21j) qui sont directement empilés les uns au-dessus des autres une distance mutuelle qui est inférieure à l'épaisseur des fromages (12) placés sur, ou devant être placés sur, les plateaux d'affinage du fromage (1a - 1j, 21a - 21j), et un état d'utilisation, dans lequel les pièces d'écartement (8, 9, 10, 11, 28, 29, 30, 31) fournissent au premier plateau d'affinage du fromage et à l'autre plateau d'affinage du fromage (1a - 1j, 21a - 21j) qui sont directement empilés l'un au-dessus de l'autre une distance mutuelle qui est supérieure à l'épaisseur des fromages (12) placés sur le premier plateau d'affinage du fromage (1a - 1j, 21a - 21j), **caractérisé en ce que**
les pièces d'écartement (8, 9, 10, 11, 28, 29, 30, 31) sont prévues de manière à ne pas être en symétrie ponctuelle sur un plateau d'affinage du fromage (1a - 1j, 21a - 21j) et où les pièces d'écartement (8, 9, 10, 11, 28, 29, 30, 31) sont déplacées après l'étape d) et avant étape f) de l'état de stockage à un état d'utilisation, où le déplacement comprend le fait de tourner un plateau d'affinage du fromage (1a - 1j, 21a - 21j) dans un plan horizontal entre un état de stockage et l'état d'utilisation.

2. Procédé selon la revendication 1, **caractérisé en ce que** les pièces d'écartement (8, 9, 10, 11, 28, 29, 30, 31) sont orientées dans l'état d'utilisation de sorte qu'une charge verticale vers le bas plus élevée du plateau d'affinage du fromage maintienne les pièces d'écartement (8, 9, 10, 11,28, 29, 30, 31) plus fermes dans l'état d'utilisation.

3. Procédé selon l'une des revendications précédentes, **caractérisé en ce que** des moyens de verrouillage sont prévus pour verrouiller les pièces d'écartement (8, 9, 10, 11, 28, 29, 30, 31) dans un état particulier et **en ce que** les pièces d'écartement (8, 9, 10, 11, 28, 29, 30, 31) sont verrouillées après que les pièces d'écartement (8, 9, 10, 11, 28, 29, 30, 31) ont été déplacées dans l'état particulier.

4. Dispositif d'affinage du fromage, comprenant un espace entouré de murs d'un bâtiment et pourvu d'au moins une claie d'affinage du fromage comprenant des plateaux d'affinage du fromage (1a - 1j, 21a - 21j) empilés les uns au-dessus des autres, où les fromages (12) devant être affinés sont placés au-dessus des plateaux d'affinage du fromage (1a - 1j, 21a - 21j),
où l'au moins une claie d'affinage du fromage est composée de plateaux d'affinage du fromage (1a - 1j, 21a - 21j) qui sont pourvus de pièces d'écartement (8, 9, 10, 11, 28, 29, 30, 31), lesquelles pièces d'écartement (8, 9, 10, 11, 28, 29, 30, 31) sont mobiles entre un état de stockage, dans lequel les pièces d'écartement (8, 9, 10, 11, 28, 29, 30, 31) fournissent aux plateaux d'affinage du fromage directement empilés (1a - 1j, 21a - 21j) les uns au-dessus des autres une distance mutuelle qui est inférieure à l'épaisseur des fromages (12) placés, ou devant être placés, au-dessus des plateaux d'affinage du fromage (1a - 1j, 21a - 21j), et un état d'utilisation, dans lequel les pièces d'écartement (8, 9, 10, 11, 28, 29, 30, 31) fournissent au premier plateau d'affinage du fromage et à l'autre plateau d'affinage du fromage directement empilés (1a - 1j , 21a - 21j) l'un au-dessus de l'autre une distance mutuelle qui est supérieure à l'épaisseur des fromages (12) au-dessus du premier plateau d'affinage du fromage (1a - 1j, 21a - 21j), **caractérisé en ce que**
les pièces d'écartement (8, 9, 10, 11, 28, 29, 30, 31) sont prévues de manière à ne pas être en symétrie ponctuelle sur un plateau d'affinage du fromage (1a - 1j, 21a - 21j) et où les pièces d'écartement (8, 9, 10, 11, 28, 29, 30, 31) sont mobiles en tournant un plateau d'affinage du fromage (1a - 1j, 21a - 21j) dans un plan horizontal entre un état de stockage et un état d'utilisation.

5. Dispositif d'affinage du fromage selon la revendication 4, **caractérisé en ce que** les pièces d'écartement (8, 9, 10, 11, 28, 29, 30, 31) sont orientées dans l'état d'utilisation de sorte qu'une charge verticale vers le bas plus élevée du plateau d'affinage du fromage maintienne les pièces d'écartement (8, 9, 10, 11,28, 29, 30, 31) plus fermes dans l'état d'utilisation.

6. Dispositif d'affinage du fromage selon l'une des revendications 4 et 5, **caractérisé en ce que** des moyens de verrouillage sont prévus pour verrouiller les pièces d'écartement (8, 9, 10, 11, 28, 29, 30, 31) dans un état particulier.

7. Dispositif d'affinage du fromage selon l'une des revendications 4 à 6, **caractérisé en ce qu'**un plateau d'affinage du fromage (1a - 1j, 21a - 21j) comprend une ou plusieurs paroi(s) circonférentielle(s) (3, 4, 5, 6, 23, 24, 25, 26) qui s'étend/s'étendent transversalement au plan de support.

8. Plateau d'affinage du fromage (1a - 1j, 21a - 21j) agencé pour être utilisé dans un dispositif d'affinage du fromage selon l'une des revendications 4 à 7 et/ou dans un procédé selon l'une des revendications 1 à 3, dans lequel le plateau d'affinage du fromage (1a - 1j, 21a - 21j) est pourvu de pièces d'écartement (8, 9, 10, 11, 28, 29, 30, 31), lesquelles pièces d'écartement (8, 9, 10, 11, 28, 29 , 30, 31) sont mobiles entre un état de stockage, dans lequel les pièces d'écartement (8, 9, 10, 11, 28, 29, 30, 31) fournissent aux plateaux d'affinage du fromage directement empilés (1a - 1 j, 21a - 21 j) les uns au-dessus des autres une distance mutuelle qui est inférieure à l'épaisseur des fromages (12) placés, ou devant être placés, au-dessus des plateaux d'affinage du fromage (1a - 1j, 21a - 21j), et un état d'utilisation, dans lequel les pièces d'écartement (8, 9, 10, 11, 28, 29, 30, 31) fournissent au premier plateau d'affinage du fromage et à l'autre plateau d'affinage du fromage directement empilés (1a - 1j, 21a - 21j) l'un au-dessus de l'autre une distance mutuelle qui est supérieure à l'épaisseur des fromages (12) au-dessus du premier plateau d'affinage du fromage (1a - 1j, 21a - 21j), **caractérisé en ce que**
les pièces d'écartement (8, 9, 10, 11, 28, 29, 30, 31) sont prévues de manière à ne pas être en symétrie ponctuelle sur un plateau d'affinage du fromage (1a - 1j, 21a - 21j) et où les pièces d'écartement (8, 9, 10, 11, 28, 29, 30, 31) sont mobiles en tournant un plateau d'affinage du fromage (1a - 1j, 21a - 21j) dans un plan horizontal entre un état de stockage et un état d'utilisation.
